# EUROPÄISCHE PATENTANMELDUNG

(11) **EP 2 246 768 A2**
(43) Veröffentlichungstag der Anmeldung: **03.11.2010**
(21) Anmeldenummer: 10160184.7
(22) Anmeldetag: 16.04.2010
(51) Int. Cl.: G05D 23/19

(54) **Regelverfahren für ein Heizungssystem**

(30) Priorität: 30.04.2009 DE 102009019619
(71) Anmelder: Robert Bosch GmbH, 70442 Stuttgart (DE)
(72) Erfinder: Kreeb, Christoph, 35396 Giessen (DE)

(57) **Zusammenfassung**

Die Erfindung betrifft ein Verfahren zum Regeln eines Heizungssystems mit einem Heizgerät, mindestens einem Heizkreis zu einem Wärmeverbraucher und wahlweise einem Warmwasserspeicher mit angeschlossener Zapfstelle, mit einem Temperaturfühler zur Erfassung der Warmwassertemperatur und/oder einer Messeinrichtung zur Erfassung einer Warmwasserentnahme, mit einem an einem Regler einzugebenden Sollwert für die Warmwassertemperatur und einem Sollwert für die Raumtemperatur eines zu beheizenden Raumes und/oder die Vorlauftemperatur des Heizkreises, wobei der Regler nach vorgegebenen Schaltzeiten in einem Normalbetriebsmodus mit zugeordneten ersten, höheren Temperatursollwerten sowie in einem Abschalt- oder Absenkmodus mit zugeordneten zweiten, niedrigeren Temperatursollwerten betreibbar ist. Der Erfindung liegt daher die Aufgabe zugrunde, den Wirkungsgrad einer Heizungsanlage zu optimieren und Energie zu sparen. Gekennzeichnet ist das Verfahren dadurch, dass nach Ablauf einer vorgebbaren Zeit ohne detektierte Warmwasserentnahme der Regler von einer Abwesenheit eines Heizungsnutzers ausgeht und aus dem Normalbetriebsmodus in den Abschalt- oder Absenkmodus wechselt, wobei damit eine Absenkung des Sollwertes für die Raumtemperatur eines zu beheizenden Raumes und/oder der Vorlauftemperatur des Heizkreises, eine Absenkung des Sollwertes für die Warmwassertemperatur und oder eine Deaktivierung einer Zirkulationspumpe verbunden ist.

## Beschreibung

### Verfahren zum Regeln eines Heizungssystems

Die Erfindung betrifft ein Verfahren zum Regeln eines Heizungssystems nach dem Oberbegriff des Patentanspruches 1.

Erfindungsgemäß gehören zu den wesentlichen Bestandteilen eines Heizungssystems mindestens ein Heizgerät, mindestens ein Heizkreis zu mindestens einem Wärmeverbraucher und wahlweise mindestens ein Warmwasserspeicher mit mindestens einer angeschlossenen Zapfstelle. Auch können die Heizgeräte als Kombigeräte mit einem intergrierten Kleinspeicher oder als Durchlauferhitzer ausgeführt sein, welche dann jeweils einen Warmwasserdurchflusssensor aufweisen.

Der Sollwert für die Warmwassertemperatur im oberen Bereich des Warmwasserspeichers wird üblicherweise am Regler eines Heizgerätes eingegeben. Er entspricht einer Ausschalttemperatur, die über eine Schalthysterese mit einer Einschalttemperatur, d. h. dem Beginn der Nachladung, in Zusammenhang steht. Heizgerät bzw. Warmwasserspeicher sind mit einer Messeinrichtung zur Erfassung einer Warmwasserentnahme ausgestattet. Dies kann beispielsweise ein Temperaturfühler im oberen Bereich des Warmwasserspeichers sein, mit dem die Warmwassertemperatur erfasst wird, unterhalb der eine Nachladung erfolgt.

Neben dem Sollwert für die Warmwassertemperatur ist auch ein Sollwert für die Raumtemperatur eines zu beheizenden Raumes und/oder die Vorlauftemperatur des Heizkreises an einem Regler einzugeben. Dabei ist der Regler nach vorgegebenen Schaltzeiten in einem Normalbetriebsmodus mit zugeordneten ersten, höheren Temperatursollwerten sowie in einem Abschalt- oder Absenkmodus mit zugeordneten zweiten, niedrigeren Temperatursollwerten betreibbar. Diese Betriebsarten, auch die Eingabe von speziellen Schaltzeiten für Urlaubsbetrieb, und der dadurch bedingte automatische Betrieb sind bekannt. Jedoch vergessen oftmals Nutzer von Heizungssystemen, dass sie ihre Anlagen bei längerer Abwesenheit in den Absenk- und somit Sparbetrieb schalten. Natürlich lauft auch bei sich spontan ergebenden längeren Abwesenheitszeiten das Heizungssystem im Normalbetriebsmodus weiter. Das mögliche Energieeinsparungspotenzial wird daher nicht voll ausgeschöpft.

Für einen günstigen Wirkungsgrad einer Heizungsanlage ist es generell wichtig, dass einerseits ein ausreichender Warmwasserkomfort zur Verfügung steht. Andererseits sollte ein Warmwasserspeicher aber nur bei tatsächlichem Warmwasserbedarf aufgeheizt werden und die Auskühl- bzw. Bereitsschaftsverluste sollten klein sein.

Die einfachste Maßnahme dazu ist, den Sollwert der Warmwassertemperatur möglichst niedrig einzustellen. Dies kann jedoch zu einem Mangel an warmem Wasser führen, da beim Ausbleiben der Nachheizung kein ausreichend temperiertes Wasser zur Verfügung steht oder dieses erst mit Verzögerung bereitet wird. Außerdem ist es bekannt, die Freigabe der Warmwasserbereitung an die eingestellten Heizzeiten für angeschlossene Heizkreise zu koppeln oder wahlweise mindestens einen an einem Regler einzugebenden Zeitraum für die Freigabe der Nachladung des Warmwasserspeichers vorzusehen.

Die Warmwasserbereitung fließt mit einem immer größeren Anteil bei der Bestimmung der Kesselleistung und somit auch in die Wirtschaftlichkeit der gesamten Heizungsanlage ein, weil insbesondere bei gut Wärme gedämmten Gebäuden immer weniger Leistung für die Raumheizung als für die Warmwasserbereitung benötigt wird. Andererseits ist der Warmwasserbedarf aber auch eine erfassbare Größe, um auf anwesende Nutzer bzw. Warmwasserverbraucher zu schließen.

Der Erfindung liegt daher die Aufgabe zugrunde, den Wirkungsgrad einer Heizungsanlage zu optimieren und Energie zu sparen.

Erfindungsgemäß wird dies mit den Merkmalen des Patentanspruches 1 gelöst. Vorteilhafte Weiterbildungen sind den Unteransprüchen zu entnehmen.

Das Verfahren zum Regeln eines Heizungssystems mit einem Heizgerät ist dadurch gekennzeichnet, dass nach Ablauf einer vorgebbaren Zeit ohne detektierte Warmwasserentnahme der Regler von einer Abwesenheit eines Heizungsnutzers ausgeht und aus dem Normalbetriebsmodus in den Abschalt- oder Absenkmodus wechselt, wobei damit eine Absenkung des Sollwertes für die Raumtemperatur eines zu beheizenden Raumes und/oder der Vorlauftemperatur des Heizkreises, eine Absenkung des Sollwertes für die Warmwassertemperatur und oder eine Deaktivierung einer Zirkulationspumpe verbunden ist.

Die An- oder Abwesenheit eines Heizungsnutzers wird über im Regler vorliegende Monitorwerte, insbesondere Betriebswerte, erfasst. Diese liegen ohnehin schon im Regler vor, werden für Schaltschritte verwendet und können bisher bei Bedarf auch manuell abgerufen werden.

Ein Wechsel aus dem Normalbetriebsmodus in den Abschalt- oder Absenkmodus erfolgt nach Ablauf einer vorgebbaren Zeit ohne detektierte Warmwasserentnahme, beispielsweise etwa fünf Stunden, vorzugsweise nur stufenweise. Zunächst wird die Umschaltung nur für einen Zeitraum bis zum nächsten Schaltpunkt im Zusammenhang mit dem Normalbetriebsmodus durchgeführt. Nach einem weiteren Tag mit detektierter Abwesenheit schaltet der Regler das Heizungssystem in den Absenkbetreib und erst nach noch einem weiteren Tag in einen Frostschutz-Betriebszustand.

Sobald der Regler eine Warmwasserentnahme im Abschalt- oder Absenkmodus detektiert, wird von einer Anwesenheit eines Heizungsnutzers ausgegangen und aus dem Abschalt- oder Absenkmodus in den Normalbetriebsmodus zurück gewechselt.

Vorzugsweise ist das Detektieren einer Warmwasserentnahme im Regler mit dem Normalbetriebsmodus verknüpft und nur dann aktiv.

Der nach Ablauf einer vorgebbaren Zeit ohne detektierte Warmwasserentnahme erfolgte Wechsel aus dem Normalbetriebsmodus in den Abschalt- oder Absenkmodus wird angezeigt bzw. siganlisiert. Dies kann am Regler, an einer Bedieneinheit, und/oder über ein per Fernwirktechnik übertragenes Signal erfolgen. Genauso ist die Rückkehr in den Normalbetriebsmodus jederzeit am Regler, an einer Bedieneinheit, und/oder über ein per Fernwirktechnik schaltbar.

Die Anordnung zur Durchführung des Verfahrens ist **dadurch gekennzeichnet, dass** die Erfassung einer Warmwasserentnahme insbesondere mit einem Temperaturfühler in der Warmwasserleitung und/oder mit einem Durchflussmesser in der Warmwasserleitung oder der Kaltwasserzulaufleitung des Warmwasserspeichers erfolgt.

Durch das erfindungsgemäße, relativ frühzeitige Detektieren einer ausbleibenden Warmwasserentnahme und damit einer Abwesenheit von Personen im eigentlichen Normalbetriebsmodus mit Soll-Raum- und -Heizkreistemperaturen, Warmwasserbereitschaft und eingeschalteter Zirkulationspumpe, wird der Wirkungsgrad einer Heizungsanlage weiter optimiert und Energie gespart. Zu Komforteinbußen kommt es nicht, weil der Regler automatisch Zapfungen erkennt bzw. von Hand in den Normalbetriebsmodus zu bringen ist.

Gegenüber der normalen Auskühlung eines Warmwasserspeichers mit einer ganz langsam und geringfügig abfallenden Warmwassertemperatur ist eine Zapfung bzw. Warmwasserentnahme klar zu erkennen, weil dabei der Temperaturgradient größer ist.

## Patentansprüche

1. Verfahren zum Regeln eines Heizungssystems mit einem Heizgerät, mindestens einem Heizkreis zu einem Wärmeverbraucher, wahlweise einem Warmwasserspeicher mit angeschlossener Zapfstelle, mit einem Temperaturfühler zur Erfassung der Warmwassertemperatur und/oder einer Messeinrichtung zur Erfassung einer Warmwasserentnahme, mit einem an einem Regler einzugebenden Sollwert für die Warmwassertemperatur und einem Sollwert für die Raumtemperatur eines zu beheizenden Raumes und/oder die Vorlauftemperatur des Heizkreises, wobei der Regler nach vorgegebenen Schaltzeiten in einem Normalbetriebsmodus mit zugeordneten ersten, höheren Temperatursollwerten sowie in einem Abschalt- oder Absenkmodus mit zugeordneten zweiten, niedrigeren Temperatursollwerten betreibbar ist,
**dadurch gekennzeichnet, dass** nach Ablauf einer vorgebbaren Zeit ohne detektierte Warmwasserentnahme der Regler von einer Abwesenheit eines Heizungsnutzers ausgeht und aus dem Normalbetriebsmodus in den Abschalt- oder Absenkmodus wechselt, wobei damit eine Absenkung des Sollwertes für die Raumtemperatur eines zu beheizenden Raumes und/oder der Vorlauftemperatur des Heizkreises, eine Absenkung des Sollwertes für die Warmwassertemperatur und oder eine Deaktivierung einer Zirkulationspumpe verbunden ist.

2. Verfahren nach Anspruch 1,
**dadurch gekennzeichnet, dass** die An- oder Abwesenheit eines Heizungsnutzers über im Regler vorliegende Monitorwerte, insbesondere Betriebswerte, erfasst wird.

3. Verfahren nach den Ansprüchen 1 oder 2,
**dadurch gekennzeichnet, dass** ein Wechsel aus dem Normalbetriebsmodus in den Abschalt- oder Absenkmodus nach Ablauf einer vorgebbaren Zeit ohne detektierte Warmwasserentnahme zunächst nur für einen Zeitraum bis zum nächsten Schaltpunkt im Zusammenhang mit dem Normalbetriebsmodus erfolgt, dass nach einem weiteren Tag mit detektierter Abwesenheit der Regler das Heizungssystem in den Absenkbetreib und nach noch einem weiteren Tag in einen Frostschutz-Betriebszustand schaltet.

4. Verfahren nach einem der Ansprüche 1 bis 3,
**dadurch gekennzeichnet, dass** der Regler bei einer detektierten Warmwasserentnahme im Abschalt- oder Absenkmodus von einer Anwesenheit eines Heizungsnutzers ausgeht und aus dem Abschalt- oder Absenkmodus in den Normalbetriebsmodus zurück wechselt.

5. Verfahren nach einem der Ansprüche 1 bis 4,
**dadurch gekennzeichnet, dass** das Detektieren einer Warmwasserentnahme im Regler mit dem Normalbetriebsmodus verknüpft und nur dann aktiv ist.

6. Verfahren nach einem der Ansprüche 1 bis 5,
**dadurch gekennzeichnet, dass** der nach Ablauf einer vorgebbaren Zeit ohne detektierte Warmwasserentnahme erfolgte Wechsel aus dem Normalbetriebsmodus in den Abschalt- oder Absenkmodus am Regler, an einer Bedieneinheit, und/oder über ein per Fernwirktechnik übertragenes Signal angezeigt wird, wobei die Rückkehr in den Normalbetriebsmodus jederzeit am Regler, an einer Bedieneinheit, und/oder über ein per Fernwirktechnik schaltbar ist.

7. Anordnung zur Durchführung des Verfahrens nach den Ansprüchen 1 bis 6,
**dadurch gekennzeichnet, dass** die Erfassung einer Warmwasserentnahme insbesondere mit einem Temperaturfühler in der Warmwasserleitung und/oder mit einem Durchflussmesser in der Warmwasserleitung oder der Kaltwasserzulaufleitung eines Warmwasserspeichers erfolgt.
